# EUROPEAN PATENT APPLICATION

(11) **EP 1 914 108 A1**
(43) Date of publication of application: **23.04.2008**
(21) Application number: 06768438.1
(22) Date of filing: 02.08.2006
(51) Int. Cl.: B60L 11/18, B60L 9/18, B60L 11/14, B60R 16/03, B60R 16/04

(54) **VEHICLE POWER SUPPLY DEVICE**

(30) Priority: 08.08.2005 JP 2005229851
(71) Applicant: TOYOTA JIDOSHA KABUSHIKI KAISHA, Toyota-shi, Aichi-ken, 471-8571 (JP)
(72) Inventor: NAKAMURA, Makoto, Toyota-shi, Aichi 4718571 (JP); OYOBE, Hichirosai, Toyota-shi, Aichi 4718571 (JP); ISHIKAWA, Tetsuhiro, Toyota-shi, Aichi 4718571 (JP)
(74) Representative: TBK-Patent
(86) International application number: PCT/JP2006/315699
(87) International publication number: WO 2007/018223

(57) **Abstract**

A power supply device for a vehicle is provided with: a battery (B1) serving as an electric storage device; a connection unit (50) for receiving electric power provided from a power generation device (55) for wind power generation, for example, and charging the electric storage device, the power generation device (55) being provided outside the vehicle and exhibiting fluctuations in electric power generated thereby; and an electric power conversion unit which, during driving, operates as a load circuit and which, during charging for receiving electric power from the power generation device (55), senses fluctuations in voltage, and converts the electric power to obtain a current and a voltage suitable for charging the electric storage device. The electric power conversion unit includes a first motor generator (MG1), a first inverter (20), a second motor generator (MG2), a second inverter (30), and a control device (60) controlling the first and second inverters (20, 30) such that electric power provided to the first and second terminals is converted into direct-current electric power and provided to the electric storage device.

## Description

### Technical Field

The present invention relates to a power supply device for a vehicle, and particularly relates to a power supply device for a vehicle, capable of being charged externally.

### Background Art

An electric vehicle requires a charging device for charging a battery with a direct current. The charging device may be mounted on a vehicle, or may be installed immovably at a certain location.

If the charging device is installed immovably at a certain location, it is necessary to move an electric vehicle to the location for charging. In other words, immovable installation is disadvantageous in that charging can only be performed at the location where the charging device is immovably installed.

In contrast, if the charging device is mounted on a vehicle, there arises a problem of vehicle weight increase.

Japanese Patent Laying-Open No. 04-295202 discloses a motor-driving device and a motive power-processing device used in an electrically-powered vehicle. In this technology, the motor-driving device includes two induction motors, and charging is performed by connecting an alternating-current electric power supply source between a neutral point of stator windings of one induction motor and a neutral point of stator windings of the other induction motor.

In Japanese Patent Laying-Open No. 04-295202, to solve the problem of weight increase, a coil of a driving motor is used as a reactor, and a circuit element of an inverter that controls the motor is controlled, so that charging is performed from the alternating-current power supply. Accordingly, by utilizing an existing part, the number of parts to be newly mounted is reduced, and weight increase is suppressed.

As to the alternating-current power supply, Japanese Patent Laying-Open No. 04-295202 only assumes the fixed electric power such as a commercial electric power. However, there may be a case where a vehicle storage space is apart from a house. In such a case, an electrical work for installing an electric power line for the commercial electric power in the vehicle storage space involves great expense.

In such a case, a battery of the vehicle may be charged with the use of a stand-alone power generation device that utilizes the forces of nature.

Examples of the stand-alone power generation device may include a wind power generation device having a frequency or a voltage changed randomly, and a solar power generation device having a voltage changed, in accordance with the weather or the time. Direct connection with such a power generation device is not assumed in Japanese Patent Laying-Open No. 04-295202.

### Disclosure of the Invention

An object of the present invention is to provide a power supply device for a vehicle, capable of being charged suitably from a stand-alone power generation device.

To summarize, the present invention is a power supply device for a vehicle, including: an electric storage device; a connection unit for receiving electric power provided from a power generation device and charging the electric storage device, the power generation device being provided outside the vehicle and exhibiting fluctuations in electric power generated thereby; and an electric power conversion unit which, during driving, operates as a load circuit receiving electric power from the electric storage device and which, during charging for receiving electric power from the power generation device, is connected between the connection unit and the electric storage device, senses fluctuations in voltage of the electric power provided from the connection unit, and converts the electric power to obtain a current and a voltage suitable for charging the electric storage device.

Preferably, the connection unit includes first and second terminals. The electric power conversion unit includes a first rotating electric machine connected to the first terminal, a first inverter provided to correspond to the first rotating electric machine, and transmitting and receiving electric power to and from the electric storage device, a second rotating electric machine connected to the second terminal, a second inverter provided to correspond to the second rotating electric machine, and transmitting and receiving electric power to and from the electric storage device, a sensor sensing a voltage and a current of the electric power provided through the first and second terminals, and a control device controlling, in accordance with an output of the sensor, the first and second inverters such that electric power provided to the first and second terminals is converted into direct-current electric power and provided to the electric storage device.

More preferably, the first terminal is connected to a neutral point of a stator of the first rotating electric machine, and the second terminal is connected to a neutral point of a stator of the second rotating electric machine.

More preferably, the power generation device includes a third rotating electric machine having a rotor connected to an input rotary shaft. The control device stores electricity in the electric storage device by controlling the first and second inverters to control the third rotating electric machine by electric power of the electric storage device to assist initial motion of the input rotary shaft, and subsequently receiving electric power generated by the third rotating electric machine.

More preferably, a rotary shaft of the second rotating electric machine is mechanically coupled to a rotary shaft of a wheel. The vehicle is provided with an internal combustion engine having a crankshaft mechanically coupled to a rotary shaft of the first rotating electric machine.

More preferably, the connection unit includes a group of connecting terminals. The electric power conversion unit includes an inverter transmitting and receiving electric power to and from the electric storage device, a first rotating electric machine, rotation of the first rotating electric machine being controlled by the inverter during driving of the vehicle, and a connection switching unit provided between the inverter and the first rotating electric machine, selecting one of the first rotating electric machine and the group of the connecting terminals, and connecting the selected one to the inverter. The power generation device includes a second rotating electric machine having a rotor connected to an input rotary shaft. When the control device senses that the power generation device is connected to the group of the connecting terminals, the control device stores electricity in the electric storage device by controlling the inverter to control the second rotating electric machine by electric power of the electric storage device to assist initial motion of the input rotary shaft, and subsequently receiving electric power generated by the second rotating electric machine.

Preferably, the power generation device is a wind power generation device. Preferably, the power generation device is a solar battery.

According to the present invention, charging can be performed with the use of a low-cost power generation device provided outside the vehicle, and only a small amount of fuel for supply is required.

### Brief Description of the Drawings

Fig. 1 is a schematic block diagram of a vehicle according to an embodiment of the present invention.
Fig. 2 is a functional block diagram of a control device 60 shown in Fig. 1.
Fig. 3 is a functional block diagram of a converter control unit 61 shown in Fig. 2.
Fig. 4 is a functional block diagram of first and second inverter control units 62, 63 shown in Fig. 2.
Fig. 5 is a diagram of a circuit diagram in Fig. 1, which circuit diagram is simplified to focus on a portion relating to charging.
Fig. 6 is a diagram showing a control state of a transistor during charging.
Fig. 7 is a flowchart showing a control structure of a program relating to a determination as to the start of charging, which determination is made by control device 60 shown in Fig. 1.
Fig. 8 is a circuit diagram showing a configuration of a vehicle 200 according to a second embodiment.
Fig. 9 is a flowchart for describing a charge-control operation performed in the second embodiment.

### Best Modes for Carrying Out the Invention

The embodiments of the present invention will hereinafter be described in detail with reference to the drawings. Note that the same or corresponding portions are provided with the same reference characters, and the description thereof will not be repeated.

### [First Embodiment]

Some of the stand-alone power generation devices that are not connected to a commercial electric power system, such as a wind power generation device and a solar power generation device, may exhibit fluctuations in electric power supplied thereby. If such a power generation device, which cannot provide stable electric power supply, is used as a charging device for an electric vehicle, time required for completion of charging may fluctuate, and hence such a device may sometimes be problematic for serving as dedicated energy supply means.

In contrast, in recent years, attention has been focused on a hybrid vehicle that uses a motor and an engine in combination for driving a wheel, as an environmental-friendly vehicle. As to the hybrid vehicle, fuel can separately be supplied as energy supply means, and hence the battery is not necessarily charged to a charge completion state. Accordingly, fuel consumption can be reduced by a combined use of fuel and energy supply from the stand-alone power generation device described above, and thus the combined use thereof in the hybrid vehicle is practical.

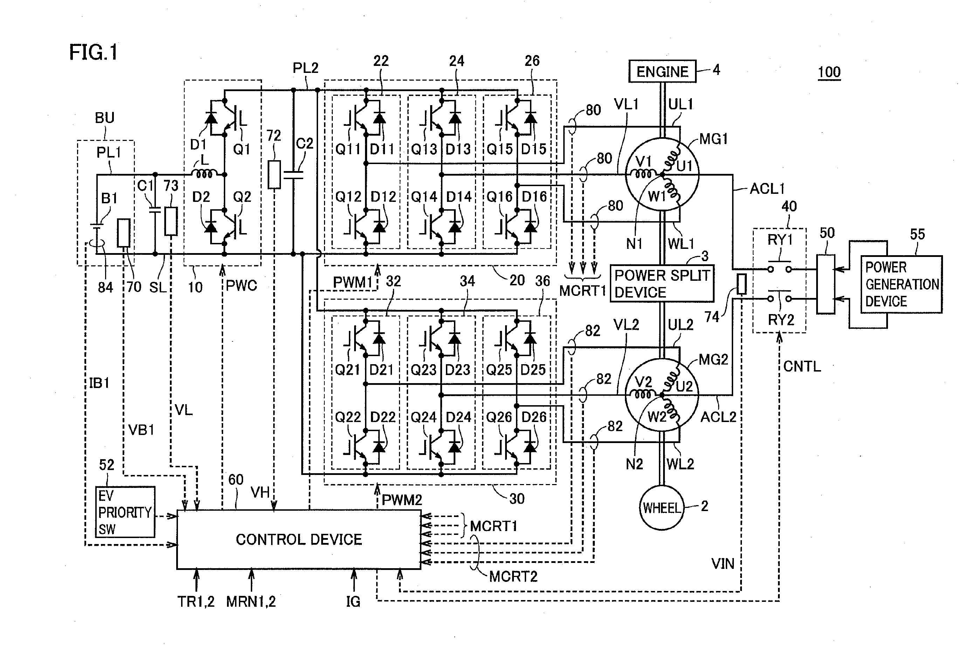

Fig. 1 is a schematic block diagram of a vehicle according to an embodiment of the present invention.

With reference to Fig. 1, a vehicle 100 includes a battery unit BU, a voltage step up converter 10, inverters 20, 30, power supply lines PL1, PL2, a ground line SL, U-phase lines UL1, UL2, V-phase lines VL1, VL2, W-phase lines WL1, WL2, motor generators MG1, MG2, an engine 4, a power split device 3, and a wheel 2.

Vehicle 100 is a hybrid vehicle that uses a motor and an engine in combination for driving the wheel.

Power split device 3 is a mechanism coupled to engine 4 and motor generators MG1, MG2 for distributing motive power among them. For example, a planetary gear mechanism having three rotary shafts of a sun gear, a planetary carrier, and a ring gear may be used for the power split device. The three rotary shafts are connected to rotary shafts of engine 4, motor generators MG1, MG2, respectively. For example, engine 4 and motor generators MG1, MG2 can mechanically be connected to power split device 3 by allowing a crankshaft of engine 4 to extend through the hollow center of a rotor of motor generator MG1.

A rotary shaft of motor generator MG2 is coupled to wheel 2 through a reduction gear, a differential gear, and the like not shown. A speed reducer for the rotary shaft of motor generator MG2 may further be incorporated inside power split device 3.

Motor generator MG1 is incorporated in the hybrid vehicle for operating as a power generator driven by the engine and operating as an electric motor capable of starting the engine, while motor generator MG2 is incorporated in the hybrid vehicle for serving as an electric motor that drives a driving wheel of the hybrid vehicle.

Each of motor generators MG1, MG2 is, for example, a three-phase alternating-current synchronous electric motor. Motor generator MG1 includes three-phase coils composed of a U-phase coil U1, a V-phase coil V1, and a W-phase coil W1, as a stator coil. Motor generator MG2 includes three-phase coils composed of a U-phase coil U2, a V-phase coil V2, and a W-phase coil W2, as a stator coil.

Motor generator MG1 uses an engine output to thereby generate a three-phase alternating-current voltage, and outputs the generated three-phase alternating-current voltage to inverter 20. Furthermore, motor generator MG1 generates a driving force by a three-phase alternating-current voltage received from inverter 20 to thereby start the engine.

Motor generator MG2 generates driving torque for the vehicle by a three-phase alternating-current voltage received from inverter 30. Furthermore, motor generator MG2 generates a three-phase alternating-current voltage and outputs the same to inverter 30 during regenerative braking of the vehicle.

Battery unit BU includes a battery B1 serving as an electric storage device having a negative electrode connected to ground line SL, a voltage sensor 70 that measures a voltage VB 1 of battery B1, and a current sensor 84 that measures a current IB1 of battery B1. A vehicle load includes motor generators MG1, MG2, inverters 20, 30, and voltage step up converter 10 that supplies a stepped-up voltage to inverters 20, 30.

In battery unit BU, a secondary battery such as a nickel metal hydride battery, a lithium-ion battery, or a lead battery may be used for battery B1. Alternatively, a large-capacity electric double-layer capacitor may also be used instead of battery B1.

Battery unit BU outputs a direct-current voltage output from battery B 1 to voltage step up converter 10. Furthermore, battery B 1 inside battery unit BU is charged with a direct-current voltage output from voltage step up converter 10.

Voltage step up converter 10 includes a reactor L, npn-type transistors Q1, Q2, and diodes D1, D2. Reactor L has one end connected to power supply line PL1, and the other end connected to a connection point of npn-type transistors Q1, Q2. The npn-type transistors Q1, Q2 are connected in series between power supply line PL2 and ground line SL, and each receives a signal PWC from a control device 60 at its base. Diodes D1, D2 are connected between the collectors and the emitters of npn-type transistors Q1, Q2, respectively, such that a current flows from the emitter side to the collector side.

For the above-described npn-type transistors and the npn-type transistor described herein, an IGBT (Insulated Gate Bipolar Transistor) may be used. Furthermore, an electric power switching element such as a power MOSFET (metal oxide semiconductor field-effect transistor) may be substituted for the npn-type transistor.

Inverter 20 includes a U-phase arm 22, a V-phase arm 24, and a W-phase arm 26. U-phase arm 22, V-phase arm 24, and W-phase arm 26 are connected in parallel between power supply line PL2 and ground line SL.

U-phase arm 22 includes npn-type transistors Q11, Q12 connected in series. V-phase arm 24 includes npn-type transistors Q13, Q14 connected in series. W-phase arm 26 includes npn-type transistors Q15, Q16 connected in series. Diodes D11-D16 are connected between the collectors and the emitters of the npn-type transistors Q11-Q16, respectively, for allowing a current to flow from the emitter side to the collector side. The connection points of the npn-type transistors in the U, V, and W-phase arms are connected to coil ends different from a neutral point N1 of the U, V, and W-phase coils of motor generator MG1 through U, V, and W-phase lines UL1, VL1, and WL1, respectively.

Inverter 30 includes a U-phase arm 32, a V-phase arm 34, and a W-phase arm 36. U-phase arm 32, V-phase arm 34, and W-phase arm 36 are connected in parallel between power supply line PL2 and ground line SL.

U-phase arm 32 includes npn-type transistors Q21, Q22 connected in series. V-phase arm 34 includes npn-type transistors Q23, Q24 connected in series. W-phase arm 36 includes npn-type transistors Q25, Q26 connected in series. Diodes D21-D26 are connected between the collectors and the emitters of npn-type transistors Q21-Q26, respectively, for allowing a current to flow from the emitter side to the collector side. In inverter 30, the connection points of the npn-type transistors in the U, V, and W-phase arms are also connected to coil ends different from a neutral point N2 of the U, V, and W-phase coils of motor generator MG2 through U, V, and W-phase lines UL2, VL2, and WL2, respectively.

Vehicle 100 further includes capacitors C1, C2, a relay circuit 40, a connector 50, an EV priority switch 52, control device 60, electric power input lines ACL1, ACL2, voltage sensors 72-74, and current sensors 80, 82.

Capacitor C1 is connected between power supply line PL1 and ground line SL, to reduce the effect caused by voltage fluctuations on battery B 1 and voltage step up converter 10. A voltage VL between power supply line PL1 and ground line SL is measured by voltage sensor 73.

Capacitor C2 is connected between power supply line PL2 and ground line SL, to reduce the effect caused by voltage fluctuations on inverters 20, 30 and voltage step up converter 10. A voltage VH between power supply line PL2 and ground line SL is measured by voltage sensor 72.

Voltage step up converter 10 steps up a direct-current voltage supplied from battery unit BU through power supply line PL1 and outputs the same to power supply line PL2. More specifically, based on signal PWC from control device 60, voltage step up converter 10 performs a voltage step up operation by storing in reactor L a current flowing in accordance with a switching operation of npn-type transistor Q2, as magnetic field energy, and by releasing the stored energy by allowing a current to flow to power supply line PL2 through diode D 1 in synchronization with a timing at which npn-type transistor Q2 is turned off.

Furthermore, based on signal PWC from control device 60, voltage step up converter 10 steps down a direct-current voltage received from one of, or both of inverters 20 and 30 through power supply line PL2 to a voltage level of battery unit BU, and charges the battery inside battery unit BU.

Based on a signal PWM1 from control device 60, inverter 20 converts a direct-current voltage supplied from power supply line PL2 into a three-phase alternating-current voltage, and drives motor generator MG1.

Motor generator MG1 is thereby driven to generate torque specified by a torque command value TR1. Furthermore, based on signal PWM1 from control device 60, inverter 20 converts the three-phase alternating-current voltage, which is generated by motor generator MG1 upon receipt of an output from the engine, into a direct-current voltage, and outputs the obtained direct-current voltage to power supply line PL2.

Based on a signal PWM2 from control device 60, inverter 30 converts the direct-current voltage supplied from power supply line PL2 into a three-phase alternating-current voltage, and drives motor generator MG2.

Motor generator MG2 is thereby driven to generate torque specified by a torque command value TR2. Furthermore, during regenerative braking of a hybrid vehicle having vehicle 100 mounted thereon, based on signal PWM2 from control device 60, inverter 30 converts the three-phase alternating-current voltage, which is generated by motor generator MG2 upon receipt of a turning force from a drive shaft, into a direct-current voltage, and outputs the obtained direct-current voltage to power supply line PL2.

The regenerative braking herein referred to includes braking accompanied by regenerative power generation when a driver that drives the hybrid vehicle operates a foot brake, and deceleration (or termination of acceleration) of the vehicle accompanied by regenerative power generation by the driver's lifting a foot off from an accelerator pedal during running of the vehicle, without operating a foot brake.

Relay circuit 40 includes relays RY1, RY2. For relays RY1, RY2, a mechanical contact relay may be used, for example, or alternatively, a semiconductor relay may also be used. Relay RY1 is provided between electric power input line ACL and connector 50, and is turned on/off in accordance with a control signal CNTL from control device 60. Relay RY2 is provided between electric power input line ACL2 and connector 50, and is turned on/offin accordance with control signal CNTL from control device 60.

Relay circuit 40 connects electric power input lines ACL1, ACL2 to/ disconnects electric power input lines ACL1, ACL2 from connector 50 in accordance with control signal CNTL from control device 60. In other words, when receiving control signal CNTL at an H (logic high) level from control device 60, relay circuit 40 electrically connects electric power input lines ACL1, ACL2 to connector 50. When receiving control signal CNTL at an L (logic low) level from control device 60, relay circuit 40 electrically disconnects electric power input lines ACL1, ACL2 from connector 50.

Connector 50 includes a terminal for inputting electric power from outside to neutral points N1, N2 of motor generators MG1, MG2. For example, electric power provided from a power generation device 55 that exhibits fluctuations in electric power input thereby, such as a wind power generation device or a solar power generation device, may be input to the vehicle through connector 50. Note that an alternating current of 100 V may also be input from a commercial electric power line for household use. A line voltage VIN between electric power input lines ACL and ACL2 is measured by voltage sensor 74, and the measured value is transmitted to control device 60.

Voltage sensor 70 detects a battery voltage VB 1 of battery B1, and outputs the detected battery voltage VB1 to control device 60. Voltage sensor 73 detects a voltage across capacitor C1, namely, an input voltage VL to voltage step up converter 10, and outputs the detected voltage VL to control device 60. Voltage sensor 72 detects a voltage across capacitor C2, namely, an output voltage VH from voltage step up converter 10 (which corresponds to input voltages to inverters 20, 30; the same applies to the following), and outputs the detected voltage VH to control device 60.

Current sensor 80 detects a motor current MCRT 1 flowing through motor generator MG1, and outputs the detected motor current MCRT to control device 60. Current sensor 82 detects a motor current MCRT2 flowing through motor generator MG2, and outputs the detected motor current MCRT2 to control device 60.

Based on torque command values TR1, TR2 and motor rotation speeds MRN1, MRN2 of motor generators MG1, MG2 output from an ECU (Electronic Control Unit) externally provided, voltage VL from voltage sensor 73, and voltage VH from voltage sensor 72, control device 60 generates signal PWC for driving voltage step up converter 10, and outputs the generated signal PWC to voltage step up converter 10.

Furthermore, based on voltage VH, and motor current MCRT1 and torque command value TR1 of motor generator MG1, control device 60 generates signal PWM1 for driving motor generator MG1, and outputs the generated signal PWM1 to inverter 20. Furthermore, based on voltage VH, and motor current MCRT2 and torque command value TR2 of motor generator MG2, control device 60 generates signal PWM2 for driving motor generator MG2, and outputs the generated signal PWM2 to inverter 30.

Based on a signal IG from an ignition switch (or an ignition key) and a state of charge SOC of battery B1, control device 60 generates signals PWM1, PWM2 for controlling inverters 20, 30 such that battery B1 is charged with a voltage provided to neutral points N1, N2 of motor generators MG1, MG2.

Furthermore, based on state of charge SOC of battery B1, control device 60 determines whether or not battery B1 can be charged from outside. If control device 60 determines that battery B1 can be charged, it outputs control signal CNTL at an H level to relay circuit 40. In contrast, if control device 60 determines that battery B1 is approximately fully charged and cannot be charged, it outputs control signal CNTL at an L level to relay circuit 40. If signal IG shows a stopped state, control device 60 stops inverters 20, 30.

In accordance with an instruction provided through EV priority switch 52 by a driver, control device 60 switches between a hybrid running mode in which consumption of petrol in a normal manner is a prerequisite and an EV priority running mode in which the vehicle runs only by a motor with the maximum torque made smaller than in the case of the hybrid running, and electric power in the battery is used as much as possible.

Comprehensive description of Fig. 1 will now be repeated. The power supply device for the vehicle includes battery B1 serving as an electric storage device, connection unit 50 for receiving electric power provided from power generation device 55 for wind power generation, for example, and charging the electric storage device, the power generation device 55 being provided outside the vehicle and exhibiting fluctuations in electric power generated thereby, and the electric power conversion unit which, during driving, operates as a load circuit receiving electric power from the electric storage device and which, during charging for receiving electric power from the power generation device, is connected between the connection unit and the electric storage device, senses fluctuations in voltage of the electric power provided from connection unit 50, and converts the electric power to obtain a current and a voltage suitable for charging the electric storage device.

Preferably, the connection unit includes first and second terminals. The electric power conversion unit includes motor generator MG1 connected to the first terminal, first inverter 20 provided to correspond to motor generator MG1 and transmitting and receiving electric power to and from the electric storage device, motor generator MG2 connected to the second terminal, second inverter 30 provided to correspond to motor generator MG2 and transmitting and receiving electric power to and from the electric storage device, sensors 74, 80 and 82 sensing a voltage and a current of the electric power provided through the first and second terminals, and control device 60 controlling, in accordance with an output of the sensors, the first and second inverters such that the electric power provided to the first and second terminals is converted into direct-current electric power and provided to the electric storage device.

More preferably, the first terminal is connected to neutral point N1 of the stator of motor generator MG1, and the second terminal is connected to neutral point N2 of the stator of motor generator MG2.

More preferably, power generation device 55 includes a third rotating electric machine having a rotor connected to an input rotary shaft. Control device 60 stores electricity in the electric storage device by controlling inverters 20, 30 to control the third rotating electric machine by electric power of the electric storage device to assist initial motion of the input rotary shaft, and subsequently receiving electric power generated by the third rotating electric machine.

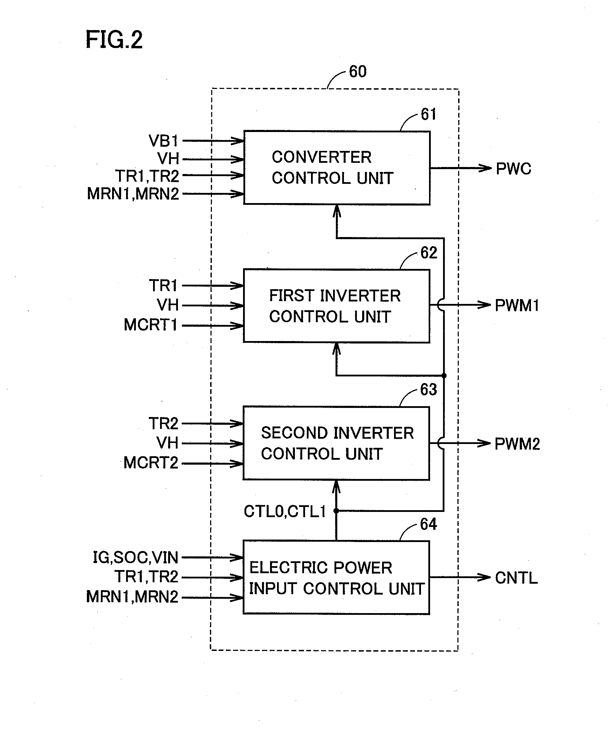

Fig. 2 is a functional block diagram of control device 60 shown in Fig. 1.

With reference to Fig. 2, control device 60 includes a converter control unit 61, a first inverter control unit 62, a second inverter control unit 63, and an electric power input control unit 64. Based on battery voltage VB1, voltage VH, torque command values TR1, TR2, and motor rotation speeds MRN1, MRN2, converter control unit 61 generates signal PWC for turning on/offnpn-type transistors Q1, Q2 in voltage step up converter 10, and outputs the generated signal PWC to voltage step up converter 10.

Based on torque command value TR1 and motor current MCRT1 of motor generator MG1 and voltage VH, first inverter control unit 62 generates signal PWM1 for turning on/off npn-type transistors Q11-Q16 in inverter 20, and outputs the generated signal PWM1 to inverter 20.

Based on torque command value TR2 and motor current MCRT2 of motor generator MG2 and voltage VH, second inverter control unit 63 generates signal PWM2 for turning on/offnpn-type transistors Q21-Q26 in inverter 30, and outputs the generated signal PWM2 to inverter 30.

Based on torque command values TR1, TR2 and motor rotation speeds MRN1, MRN2, electric power input control unit 64 determines a driving state of each of motor generators MG1, MG2, and in accordance with signal IG and the SOC of battery B1, controls the two inverters in a coordinated manner to convert the electric power provided from outside into a direct current and steps up the voltage as well, so as to charge the battery.

Here, signal IG at an H level is a signal indicating that the hybrid vehicle having vehicle 100 mounted thereon is activated, while signal IG at an L level is a signal indicating that the hybrid vehicle is stopped.

In the case where a driving state of each of motor generators MG1, MG2 is a stopped state, and where signal IG also indicates that the hybrid vehicle is stopped, and if the SOC of battery B 1 is lower than a prescribed level, electric power input control unit 64 permits a charging operation. Specifically, electric power input control unit 64 brings relays RY1, RY2 into conduction by signal CNTL, and if there is an input of voltage VIN, generates a control signal CTL1 in accordance with the input, controls inverters 20, 30 in a coordinated manner, converts the alternating-current voltage provided from outside into a direct current and steps up the voltage as well, so as to permit charging of the battery.

In contrast, in the case where a driving state of each of motor generators MG1, MG2 is a running state or signal IG indicates that the hybrid vehicle is being driven, and when the SOC of battery B 1 is higher than a prescribed level, electric power input control unit 64 does not permit a charging operation. Specifically, electric power input control unit 64 causes relays RY1, RY2 to be opened by signal CNTL, generates a control signal CTL0, and causes voltage step up converter 10 and inverters 20, 30 to perform a normal operation observed during driving of the vehicle.

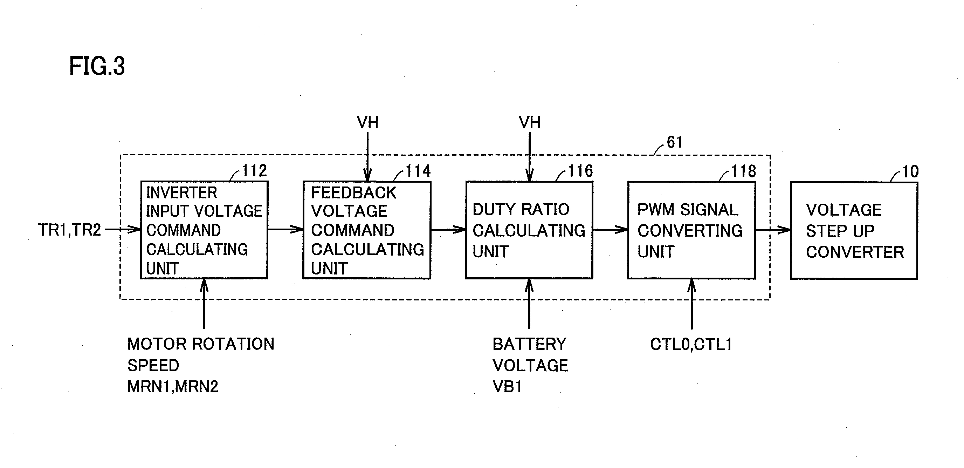

Fig. 3 is a functional block diagram of converter control unit 61 shown in Fig. 2.

With reference to Fig. 3, converter control unit 61 includes an inverter input voltage command calculating unit 112, a feedback voltage command calculating unit 114, a duty ratio calculating unit 116, and a PWM signal converting unit 118.

Based on torque command values TR1, TR2 and motor rotation speeds MRN1, MRN2, inverter input voltage command calculating unit 112 calculates an optimal value (target value), namely, a voltage command VH_com, of an inverter input voltage, and outputs the calculated voltage command VH_com to feedback voltage command calculating unit 114.

Based on output voltage VH of voltage step up converter 10 detected by voltage sensor 72 and voltage command VH_com from inverter input voltage command calculating unit 112, feedback voltage command calculating unit 114 calculates a feedback voltage command VH_com_fb for controlling output voltage VH to be voltage command VH_com, and outputs the calculated feedback voltage command VH_com_fb to duty ratio calculating unit 116.

Based on battery voltage VB1 from voltage sensor 70 and feedback voltage command VH_com_fb from feedback voltage command calculating unit 114, duty ratio calculating unit 116 calculates a duty ratio for controlling output voltage VH of voltage step up converter 10 to be a voltage command VH_com, and outputs the calculated duty ratio to PWM signal converting unit 118.

Based on the duty ratio received from duty ratio calculating unit 116, PWM signal converting unit 118 generates a PWM (pulse width modulation) signal for turning on/off npn-type transistors Q1, Q2 in voltage step up converter 10, and outputs the generated PWM signal to npn-type transistors Q1, Q2 in voltage step up converter 10, as signal PWC.

By allowing npn-type transistor Q2 in the lower arm of voltage step up converter 10 to have a longer on-time in the duty ratio, an amount of electric power to be stored in reactor L is increased, and hence it is possible to obtain an output with a higher voltage. In contrast, by allowing npn-type transistor Q1 in the upper arm to have a longer on-time in the duty ratio, the voltage on power supply line PL2 is lowered. Accordingly, by controlling the duty ratio of each of npn-type transistors Q1, Q2, it is possible to control the voltage on power supply line PL2 to be an arbitrary voltage equal to or higher than the output voltage of battery B1.

Furthermore, when control signal CTL is activated, PWM signal converting unit 118 brings npn-type transistor Q1 into a conduction state, and brings npn-type transistor Q2 into a non-conduction state, regardless of an output of duty ratio calculating unit 116. It is thereby possible to allow a charging current to flow from power supply line PL2 to power supply line PL1.

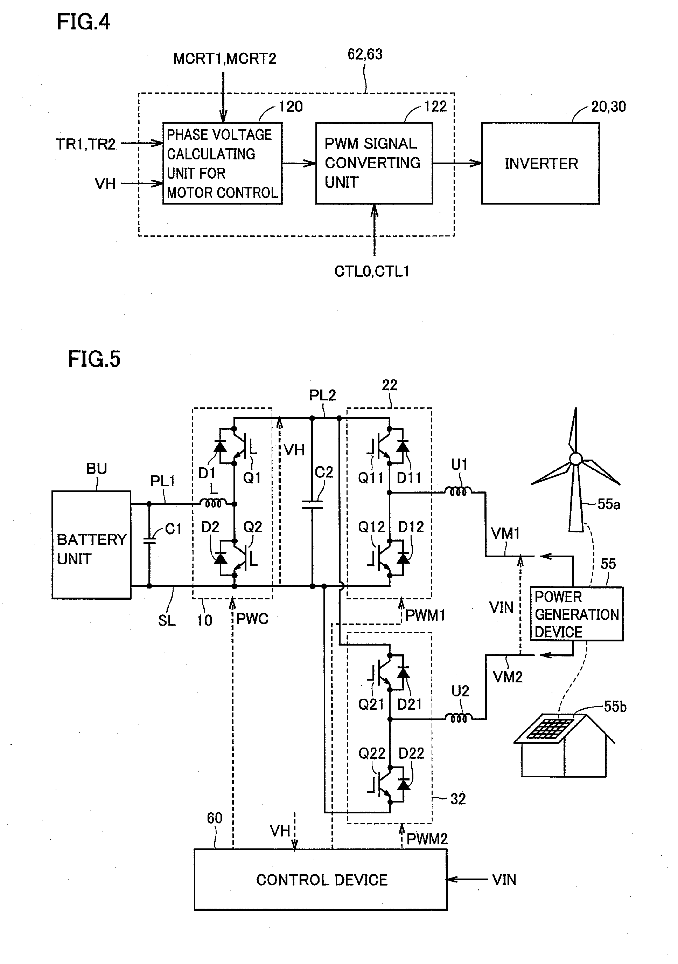

Fig. 4 is a functional block diagram of first and second inverter control units 62, 63 shown in Fig. 2.

With reference to Fig. 4, each of first and second inverter control units 62, 63 includes a phase voltage calculating unit 120 for motor control, and a PWM signal converting unit 122.

Phase voltage calculating unit 120 for motor control receives input voltage VH of inverters 20, 30 from voltage sensor 72, receives from current sensor 80 (or 82) motor current MCRT1 (or MCRT2) flowing through each of the phases in motor generator MG1 (or MG2), and receives torque command value TR1 (or TR2) from the ECU. Based on these input values, phase voltage calculating unit 120 for motor control calculates a voltage to be applied to the coil of each of the phases in motor generator MG1 (or MG2), and outputs the calculated voltage to be applied to the coil of each of the phases to PWM signal converting unit 122.

When PWM signal converting unit 122 receives a control signal CTL0 from electric power input control unit 64, it generates a signal PWM1 0 (a type of signal PWM1) (or PWM2_0 (a type of signal PWM2)) that actually turns on/off each of npn-type transistors Q11-Q16 (or Q21-Q26) in inverter 20 (or 30), based on the voltage command for the coil of each of the phases received from phase voltage calculating unit 120 for motor control, and outputs the generated signal PWM1_0 (or PWM2_0) to each of npn-type transistors Q11-Q16 (or Q21-Q26) in inverter 20 (or 30).

As such, switching control is performed on each of npn-type transistors Q1-Q16 (or Q21-Q26), and a current to flow through each of the phases in motor generator MG1 (or MG2) is controlled such that motor generator MG1 (or MG2) outputs the commanded torque. As a result, motor torque corresponding to torque command value TR1 (or TR2) is output.

Furthermore, when PWM signal converting unit 122 receives control signal CTL1 from electric power input control unit 64, it generates a signal PWM1_1 (a type of signal PWM1) (or PWM2_1 (a type of signal PWM2)) that turns on/offnpn-type transistors Q11-Q16 (or Q21-Q26) such that an in-phase alternating current flows through U-phase arm 22 (or 32), V-phase arm 24 (or 34), and W-phase arm 26 (or 36) of inverter 20 (or 30), regardless of an output of phase voltage calculating unit 120 for motor control, and outputs the generated signal PWM1_1 (or PWM2_1) to npn-type transistors Q11-Q16 (or Q21-Q26) in inverter 20 (or 30).

When an in-phase alternating current flows through the U, V, and W-phase coils, no rotational torque is generated in motor generators MG1, MG2. By controlling inverters 20, 30 in a coordinated manner, alternating-current voltage VIN is converted into a direct-current charging voltage.

A method of generating a direct-current charging voltage from alternating-current voltage VIN in vehicle 100 will now be described.

Fig. 5 is a diagram of the circuit diagram in Fig. 1, which circuit diagram is simplified to focus on a portion relating to charging.

In Fig. 5, the U-phase arm in each of inverters 20, 30 in Fig. 1 is shown as a representative example. Furthermore, the U-phase coil out of the three-phase coils in each of the motor generators is shown as a representative example. Although a description of the U-phase is made as a representative example, the circuits of other two phases operate similarly to that of the U-phase because an in-phase current is made to flow through the coils of each of the phases.

For power generation device 55, a device that receives wind power, rotates the power generator, and outputs alternating-current or direct-current electric power, such as a wind power generation device 5 5 a, and a device that converts solar light energy into direct-current electric power, such as a solar battery 55b, for example, may be used. At the time of power failure or the like in an abnormal condition, a hand generator may be used as power generation device 55 to charge a battery of the vehicle.

Furthermore, the power supply device for vehicle 100 can suitably be used for storing energy generated by a power generation device for geothermal power generation, hydroelectric power generation, or ocean thermal energy conversion, for example, which is assumed to exhibit fluctuations in electric power generated thereby.

As is understood from Fig. 5, each of a set of U-phase coil U1 and U-phase arm 22 and a set of U-phase coil U2 and U-phase arm 32 has a configuration similar to that of voltage step up converter 10. Accordingly, it is possible, for example, to convert a fluctuating alternating-current voltage into a direct-current voltage, as well as to step up the direct-current voltage to a battery charging voltage of, for example, approximately 200 V.

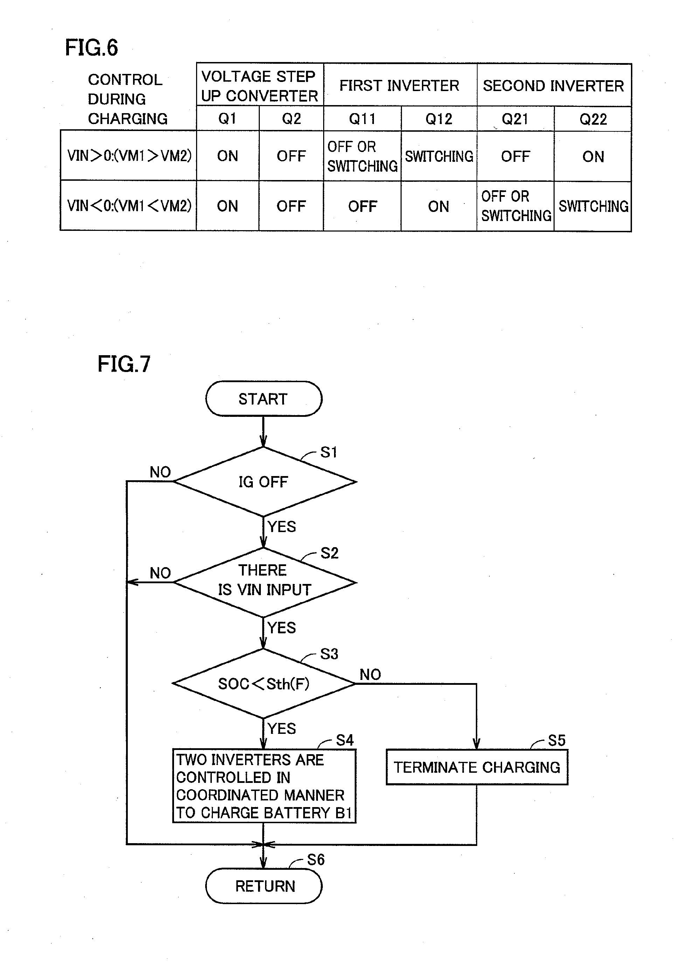

Fig. 6 is a diagram showing a control state of the transistor during charging.

With reference to Figs. 5 and 6, initially, if voltage VIN > 0, in other words, a voltage VM1 on line ACL1 is higher than a voltage VM2 on line ACL2, transistor Q1 in the voltage step up converter is brought into an on state, while a transistor Q2 in the voltage step up converter is brought into an off state. Voltage step up converter 10 can thereby allow a charging current to flow from power supply line PL2 to power supply line PL1.

In the first inverter, transistor Q12 is switched in a cycle and at a duty ratio in accordance with voltage VIN, while transistor Q11 is controlled to be in an off state or in a switching state in which transistor Q11 is brought into conduction in synchronization with the conduction of diode D11. At that time, in the second inverter, transistor Q21 is brought into an off state, while transistor Q22 is controlled to be in an on state.

If voltage VIN > 0, a current flows through a path from coil U1 through transistor Q12 and diode D22 to coil U2, with transistor Q12 being in an on state. The energy stored in coils U1, U2 at that time is released when transistor Q12 is brought into an off state, and a current flows through diode D11 to power supply line PL2. In order to reduce a loss due to diode D11, transistor Q11 may be brought into conduction in synchronization with a conduction period of diode D11. Based on the values of voltage VIN and voltage VH, a voltage step up ratio is determined, so that a switching cycle and a duty ratio of transistor Q12 are determined.

Next, if voltage VIN < 0, in other words, voltage VM1 on line ACL1 is lower than voltage VM2 on line ACL2, transistor Q1 in the voltage step up converter is brought into an on state, while transistor Q2 in the voltage step up converter is brought into an off state. Voltage step up converter 10 can thereby allow a charging current to flow from power supply line PL2 to power supply line PL1.

In the second inverter, transistor Q22 is switched in a cycle and at a duty ratio in accordance with voltage VIN, while transistor Q21 is controlled to be in an off state or in a switching state in which transistor Q21 is brought into conduction in synchronization with the conduction of diode D21. At that time, in the first inverter, transistor Q11 is brought into an off state, while transistor Q12 is controlled to be in an on state.

If voltage VIN < 0, a current flows through a path from coil U2 through transistor Q22 and diode D12 to coil U1, with transistor Q22 being in an on state. The energy stored in coils U1, U2 at that time is released when transistor Q22 is brought into an off state, and a current flows through diode D21 to power supply line PL2. In order to reduce a loss due to diode D21, transistor Q21 may be brought into conduction in synchronization with a conduction period of diode D21. At that time, based on the values of voltage VIN and voltage VH, a voltage step up ratio is also determined, so that a switching cycle and a duty ratio of transistor Q22 are determined.

By alternately repeating charge control to be performed when voltage VIN > 0 and charge control to be performed when voltage VIN < 0, it is possible to convert alternating-current electric power directly supplied to the vehicle from a wind power generation device, a hand generator, a hydraulic turbine power generator, or the like, into a direct current, and step up the voltage thereof to a voltage required for charging a battery.

Furthermore, if the charge control to be performed when voltage VIN > 0 is exclusively performed, it is possible to allow the vehicle to directly receive electric power from a power generation device that supplies direct-current electric power, such as a solar battery, step up the voltage thereof to a voltage required for charging a battery, and charge the battery.

Fig. 7 is a flowchart showing a control structure of a program relating to a determination as to the start of charging, which determination is made by control device 60 shown in Fig. 1. The process in the flowchart is invoked from a main routine and executed whenever a certain time has elapsed or a prescribed condition is established.

With reference to Figs. 1 and 7, initially in step S1, control device 60 determines whether or not signal IG is in an off state. If signal IG is not in an off state in step S1, the present state is not suitable for connecting a charging cable to the vehicle for charging. Accordingly, the process proceeds to step S6, and the control is moved to the main routine.

In step S1, if signal IG is in an off state, it is determined that the present state is suitable for charging, and the process proceeds to step S2. In step S2, relays RY1 and RY2 are controlled to be in a conduction state from a non-conduction state, and voltage VIN is measured by voltage sensor 74. If an alternating-current voltage is not observed, it is assumed that the charging cable is not connected to a socket of connector 50, or that the power generation device does not generate electric power, and hence charging is not performed and the process proceeds to step S6. The control is moved to the main routine.

Note that if the power generation device is a device that receives the fluctuating forces of nature and rotates a motor generator for power generation, such as a wind power generation is a hydroelectric power generation, and if an absolute value of voltage VIN is smaller than a prescribed value, there may be provided control in which inverters 20 and 30 are controlled in a coordinated manner once or a few times to initially move an external power generator as a motor. By causing a windmill or a hydraulic turbine to be forcibly rotated preliminarily, the windmill or the hydraulic turbine may subsequently be rotatable even by small forces of wind or water. This increases a probability that power generation can be performed.

If an alternating-current voltage or a direct-current voltage is observed as voltage VIN in step S2, the process proceeds to step S3. In step S3, it is determined whether or not the state of charge SOC of battery B1 is lower than a threshold value Sth (F) indicative of a fully-charged state.

If SOC< Sth (F) is established, battery B 1 is in a chargeable state, and hence the process proceeds to step S4. In step S4, control device 60 controls the two inverters in a coordinated manner to charge battery B 1.

In step S3, if SOC< Sth (F) is not established, battery B1 is in a fully-charged state, and requires no charging. The process therefore proceeds to step S5. In step S5, a charging termination process is performed. Specifically, inverters 20 and 30 are stopped and relays RY1, RY2 are opened, so that an input of the alternating-current electric power to vehicle 100 is shut off The process proceeds to step S6, and the control is returned to the main routine.

### [Second Embodiment]

In the first embodiment, there has been explained the case where a two-phase alternating current or a direct current is provided from the power generation device connected to the vehicle. In a second embodiment, there will be described the case where a three-phase alternating current is provided from a power generation device.

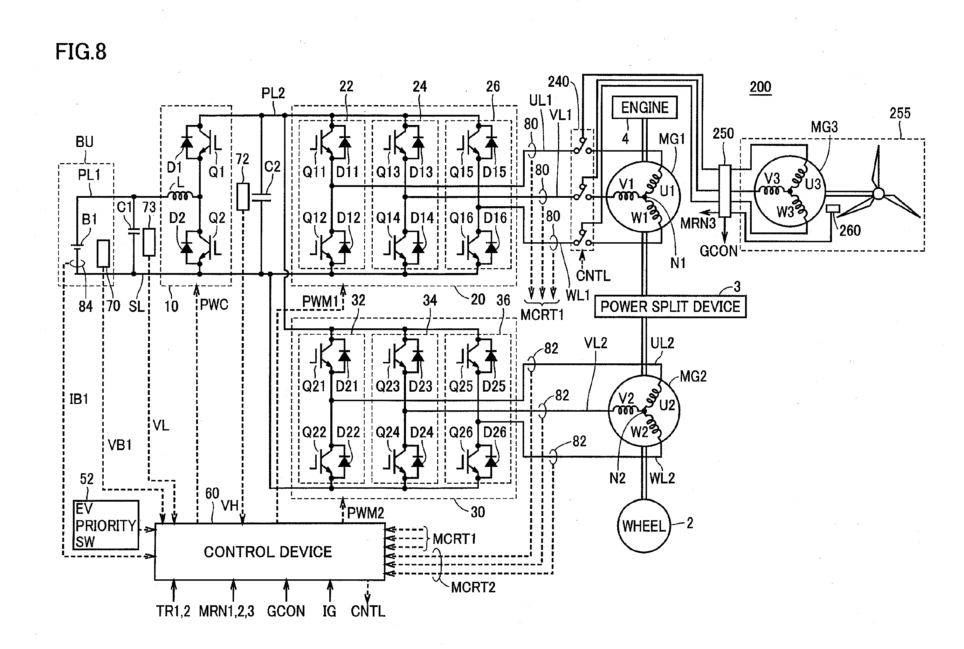

Fig. 8 is a circuit diagram showing a configuration of a vehicle 200 according to the second embodiment.

With reference to Fig. 8, vehicle 200 includes a connection switching unit 240 and a connector 250 instead of voltage sensor 74, relay circuit 40, and connector 50 in the configuration of vehicle 100 shown in Fig. 1. Configurations of other portions are the same as those in vehicle 100 shown in Fig. 1, and hence the description thereof will not be repeated.

A power generation device 255 provided at home or the like is connected to connector 250 when the vehicle is stopped. Power generation device 255 is a wind power generation device, for example, and includes a motor generator MG3 in which a windmill is attached to its rotary shaft and the rotary shaft rotates with a rotor, and a rotation sensor 260 sensing a rotation speed of the rotary shaft of motor generator MG3. Motor generator MG3 includes stator coils U3, V3 and W3 that are Y-connected.

Connector 250 is provided with at least four terminals. Stator coils U3, V3 and W3 of motor generator MG3 are connected to the first to third terminals, respectively. An output signal line of rotation sensor 260 is connected to the fourth terminal of connector 250. Through this output signal line, a rotation speed MRN 3 of motor generator MG3 is provided to control device 60.

Furthermore, connector 250 outputs a signal GCON indicating whether or not power generation device 255 is connected to the vehicle. Signal GCON is provided to control device 60. For example, signal GCON may be output by providing a switch that detects physical connection to connector 250. Alternatively, connection of power generation device 255 may be sensed by control device 60 which detects that a switch not shown is touched by the connector being connected, brought into an opened state from a conductive state, or into a conductive state from an opened state, and causes changes in resistance.

When it is sensed by signal GCON that the power generation device is connected, control device 60 sends control signal CNTL to connection switching unit 240 and switches connection of inverter 20 from motor generator MG1 to the first to third terminals of connector 250. Accordingly, inverter 20 is connected to motor generator MG3.

Comprehensive description of Fig. 8 will now be repeated. The power supply device for the vehicle is provided with battery B 1 serving as an electric storage device, connection unit 250 for receiving electric power provided from power generation device 255 and charging the electric storage device, power generation device 255 being provided outside the vehicle and exhibiting fluctuations in electric power generated thereby, and the electric power conversion unit which, during driving, operates as a load circuit receiving electric power from the electric storage device and which, during charging for receiving electric power from the power generation device, is connected between connection unit 250 and the electric storage device, senses fluctuations in voltage of the electric power provided from connection unit 250, and converts the electric power to obtain a current and a voltage suitable for charging the electric storage device.

Preferably, connection unit 250 includes a group of connecting terminals. The electric power conversion unit includes inverter 20 transmitting and receiving electric power to and from the electric storage device, motor generator MG1, rotation of which is controlled by inverter 20 during driving of the vehicle, and connection switching unit 240 provided between inverter 20 and motor generator MG1, selecting one of motor generator MG1 and the group of the connecting terminals, and connecting the selected one to inverter 20. Power generation device 255 includes motor generator MG3 having a rotor connected to an input rotary shaft. When control device 60 senses that power generation device 255 is connected to the group of the connecting terminals, control device 60 stores electricity in the electric storage device by controlling inverter 20 to control motor generator MG3 by electric power of the electric storage device to assist initial motion of the input rotary shaft, and subsequently receiving electric power generated by motor generator MG3.

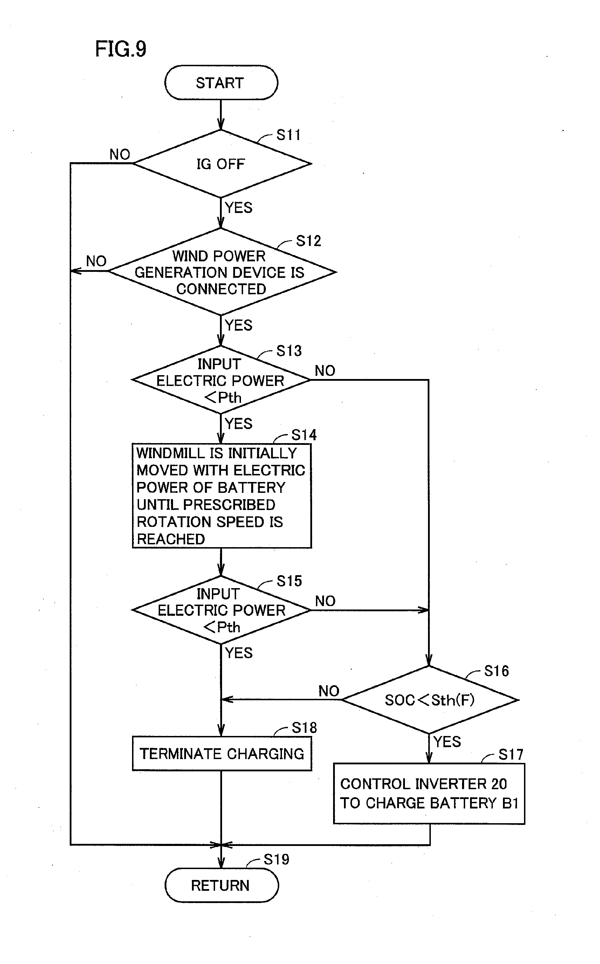

Fig. 9 is a flowchart for describing a charge-control operation performed in the second embodiment. The process in the flowchart is invoked from a main routine and executed whenever a certain time has elapsed or a prescribed condition is established.

With reference to Figs. 8 and 9, when the process is initiated, control device 60 determines in step S11 whether signal IG is in an off state or not. Signal IG is brought into an off state when, for example, a driver stops the vehicle and turns on a power switch during startup of the system.

In step S11, if signal IG is not in an off state, the process proceeds to step S 19, and the control is returned to the main routine. In contrast, if it is sensed in step S 11 that signal IG is in an off state, the process proceeds to step S12.

In step S12, control device 60 observes signal GCON to sense whether or not power generation device 255 is connected to connector 250. Power generation device 255 is, for example, a wind power generation device. Note that power generation device 255 may be a power generation device utilizing other motive power, as long as it has motor generator MG3.

If it is determined in step S12 that the power generation device is not connected, the process proceeds to step S19 and the control is returned to the main routine. In contrast, if it is determined in step S12 that the power generation device is connected, the process proceeds to step S13.

In step S13, control device 60 uses inverter 20 to control motor generator MG3 instead of motor generator MG1. Accordingly, if motor generator MG3 generates electric power, three-phase alternating-current electric power generated thereby is converted by inverter 20 into a direct current, and provided to ground line SL and power supply line PL2. If input electric power at that time is smaller than a prescribed threshold value Pth, it is assumed that the rotary shaft of power generation device 255 does not rotate, and hence the process proceeds to step S14. Note that the process may proceed to step S14 if the observed rotation speed MRN 3 is smaller than a prescribed value.

In step S14, a windmill is initially moved with the use of the electric power of battery B1 until the rotation speed of motor generator MG3 reaches a prescribed rotation speed. Such control is the one that is frequently performed when wind forces are small in wind power generation. When the rotation speed of motor generator MG3 reaches the prescribed rotation speed, control device 60 provides control again such that the electric power generated by motor generator MG3 is collected by inverter 20.

It is determined in step S15 whether or not the input electric power is smaller than threshold value Pth. If the input electric power exceeds threshold value Pth in step S13 or step S15, the process proceeds to step S16, and it is determined whether state of charge SOC of battery B1 does not exceed threshold value Sth (F) indicative of a fully-charged state.

If SOC < Sth (F) is established in step S16, battery B1 can further be charged. Accordingly, the process proceeds to step S 17, and inverter 20 is controlled to charge battery B1.

In contrast, if the input electric power is smaller than threshold value Pth in step S15, it is considered that the wind forces are not strong enough to generate electric power, and hence the process proceeds to step S18. If SOC < Sth (F) is not established in step S16, it is determined that battery B1 is approximately fully charged, and can no longer be charged. In this case again, the process proceeds to step S 18. In step S18, termination of charging is determined. After that, charging is no longer performed even if the power generation device is connected to the vehicle.

If the process in step S17 or step S18 is completed, the process proceeds to step S 19, and the control is returned to the main routine.

As described above, in the second embodiment, the inverter mounted on the vehicle is used to control the motor generator identified as the power generation device outside the vehicle, instead of the motor generator mounted on the vehicle. This inverter is the one mounted for rotating a motor generator inherently mounted on a hybrid vehicle, or collecting electric power from the motor generator mounted on the vehicle. Accordingly, the control thereof is used as it is, and hence the process is much more simpler when compared with the first embodiment.

Note that, although there is described in Fig. 8 an example in which the connection to motor generator MG1 mainly serving as a power generator is switched to an external power generation device, the connection to motor generator MG2 for mainly driving a wheel may be switched to the external power generation device.

It should be understood that the embodiments disclosed herein are illustrative and not limitative in all aspects. The scope of the present invention is shown not by the description above but by the scope of the claims, and is intended to include all modifications within the equivalent meaning and scope of the claims.

## Claims

1. A power supply device for a vehicle, comprising:
an electric storage device;
a connection unit for receiving electric power provided from a power generation device and charging said electric storage device, the power generation device being provided outside the vehicle and exhibiting fluctuations in electric power generated thereby; and
an electric power conversion unit which, during driving, operates as a load circuit receiving electric power from said electric storage device and which, during charging for receiving electric power from said power generation device, is connected between said connection unit and said electric storage device, senses fluctuations in voltage of said electric power provided from said connection unit, and converts said electric power to obtain a current and a voltage suitable for charging said electric storage device.

2. The power supply device for the vehicle according to claim 1, wherein
said connection unit includes first and second terminals, and
said electric power conversion unit includes
a first rotating electric machine connected to said first terminal,
a first inverter provided to correspond to said first rotating electric machine, and transmitting and receiving electric power to and from said electric storage device,
a second rotating electric machine connected to said second terminal,
a second inverter provided to correspond to said second rotating electric machine, and transmitting and receiving electric power to and from said electric storage device,
a sensor sensing a voltage and a current of said electric power provided through said first and second terminals, and
a control device controlling, in accordance with an output of said sensor, said first and second inverters such that electric power provided to said first and second terminals is converted into direct-current electric power and provided to said electric storage device.

3. The power supply device for the vehicle according to claim 2, wherein
said first terminal is connected to a neutral point of a stator of said first rotating electric machine, and
said second terminal is connected to a neutral point of a stator of said second rotating electric machine.

4. The power supply device for the vehicle according to claim 2, wherein
said power generation device includes a third rotating electric machine having a rotor connected to an input rotary shaft, and
said control device stores electricity in said electric storage device by controlling said first and second inverters to control said third rotating electric machine by electric power of said electric storage device to assist initial motion of said input rotary shaft, and subsequently receiving electric power generated by said third rotating electric machine.

5. The power supply device for the vehicle according to claim 2, wherein
a rotary shaft of said second rotating electric machine is mechanically coupled to a rotary shaft of a wheel, and
said vehicle is provided with an internal combustion engine having a crankshaft mechanically coupled to a rotary shaft of said first rotating electric machine.

6. The power supply device for the vehicle according to claim 1, wherein
said connection unit includes a group of connecting terminals,
said electric power conversion unit includes
an inverter transmitting and receiving electric power to and from said electric storage device,
a first rotating electric machine, rotation of said first rotating electric machine being controlled by said inverter during driving of the vehicle, and
a connection switching unit provided between said inverter and said first rotating electric machine, selecting one of said first rotating electric machine and said group of the connecting terminals, and connecting the selected one to said inverter,
said power generation device includes a second rotating electric machine having a rotor connected to an input rotary shaft, and
when said control device senses that said power generation device is connected to said group of the connecting terminals, said control device stores electricity in said electric storage device by controlling said inverter to control said second rotating electric machine by electric power of said electric storage device to assist initial motion of said input rotary shaft, and subsequently receiving electric power generated by said second rotating electric machine.

7. The power supply device for the vehicle according to claim 1, wherein said power generation device is a wind power generation device.

8. The power supply device for the vehicle according to claim 1, wherein said power generation device is a solar battery.
